# EUROPEAN PATENT SPECIFICATION

(11) **EP 3 405 516 B1**
(45) Date of publication and mention of the grant of the patent: **02.03.2022**
(21) Application number: 17707423.4
(22) Date of filing: 13.01.2017
(51) Int. Cl.: C08J 9/14

(54) **FOAMING OF A REACTION PRODUCT OF A POLYISOCYANATE AND AN ACTIVE HYDROGEN-CONTAINING COMPOUND**
SCHÄUMEN EINES REAKTIONSPRODUKTS AUS EINEM POLYISOCYANAT UND EINER AKTIVEN WASSERSTOFF ENTHALTENDEN VERBINDUNG
MOUSSAGE D'UN PRODUIT DE RÉACTION D'UN POLYISOCYANATE ET D'UN COMPOSÉ CONTENANT DE L'HYDROGÈNE ACTIF

(30) Priority: 22.01.2016 US 201662281991 P
(43) Date of publication of application: 28.11.2018
(73) Proprietor: The Chemours Company FC, LLC, Wilmington, DE 19801 (US)
(72) Inventor: WYSONG, Ernest Byron, Chadds Ford, PA 19317 (US); HITCHENS, Bruce P., Bear Delaware 19701 (US)
(74) Representative: Dannenberger, Oliver Andre
(86) International application number: PCT/US2017/013283
(87) International publication number: WO 2017/127289

(56) References cited:
- FR-A1- 2 989 374
- US-A1- 2009 012 335
- US-A1- 2010 210 747
- US-A1- 2011 237 843
- US-A1- 2011 237 844
- US-A1- 2012 104 307
- US-A1- 2014 174 084
- US-A1- 2015 210 818

## Description

### BACKGROUND INFORMATION

### Field of the Disclosure

This invention relates to the foaming of polyisocyanate (A-side)/polyol (B-side) reaction product in the presence of certain mixtures of Z-HFO-1,1,1,4,4,4-hexafluoro-2-butene and E-HFO-1,1,1,4,4,4-hexafluoro-2-butene.

### Description of the Related Art

U.S. 2011 /0144216 discloses non-azeotropic compositions containing the Z-HFO-1,1,1,4,4,4-hexafluoro-2-butene mixed with other compounds, that exhibit zero ozone depletion potential (ODP) and ultra-low global warming potential (GWP). Table 1 in '216 discloses more than 100 other compounds and their preferred amounts. '216 also discloses preferred co-blowing agent compositions and amounts of the other compound to be used in conjunction with the Z-isomer. One preferred composition is water in combination with cyclopentane [0035]. Another preferred embodiment comprises 5 to 90 wt% co-blowing agent, preferably 5 to 65 wt%, wherein the co-blowing agent comprises water, HFCs, hydrocarbons, alcohols, CO₂, and combinations thereof [0036]. HFCs are disclosed as being HFC-32, HFC-161, HFC-152, HFC-143, HFC-134, HFC-125, HFC-245, HFC-236, HFC-227ea, HFC-365mfc, HFC-356, and all isomers thereof [0021].

In the preferred composition wherein the co-blowing agent is water, its amount is 5 to 50 wt%, preferably 10 to 40 wt% or 10 to 20 wt% [0037]. In the preferred composition wherein the co-blowing agent is CO₂, its amount is 5 to 60 wt%, preferably 20 to 50 wt% or 40 to 50 wt% [0038]. In the preferred composition when the co-blowing agent is alcohol, its amount is 5 to 40 wt%, preferably 10 to 40 wt% or 15 to 25 wt% [0039]. In the preferred composition when the co-blowing agent is HFC, preferably HFC-152a or HFC-245, wherein HFC-245fa is the preferred C₃ HFC, its amounts are 5 to 80 wt%, 10- to 75 wt% or 25 to 75 wt% [0040]. In the preferred composition wherein the co-blowing agent is hydrocarbon (HC), its amount is 5 to 80 wt%, preferably 20 to 60 wt% [0041].

US 2012/0104307 A1 concerns blowing agent compositions comprising mixtures of 1,1,1,3,3,3-hexafluorobutene (1336mzzm) and 1-chloro-3,3,3-trifluoropropene (1233zd). US 2010/0210747 A1 relates to a foam-forming composition which includes E-1,1,1,4,4,4-hexafluoro-2-butene and an active hydrogen-containing compound having two or more active hydrogens. US 2015/0210818 A1 pertains to cryogenic insulation foam compositions comprising a fluoroolefin blowing agent containing Z- or E-HFO-1,1,1,4,4,4-hexafloro-2-butene or 1-chloro-3,3,3-trifluoro-1-propene.

### SUMMARY

Independent of the voluminous disclosure in US 2011/0144216, it has been discovered that Z-HFO-1,1,1,4,4,4-hexafluoro-2-butene (Z-1336mzz) enhances the solubility of E-HFO-1,1,1,4,4,4-hexafloro-2-butene (E-1336mzz) in the B-side composition of the polyisocyanate/polyol reaction, enabling certain compositions of these co-blowing agent to provide quality foams of low density and low thermal conductivity, especially by spray application.

According to one embodiment of the present invention, it is the process comprising forming a foamed reaction product obtained by reacting polyisocyanate with an active hydrogen-containing compound in the presence of blowing agent comprising 57 to 73 wt% Z-1,1,1,4,4,4-hexafluoro-2-butene and 43 to 27 wt% E-1,1,1,4,4,4-hexafluoro-2-butene, based on the combined weight of these isomers totaling 100 wt%, to obtain said foamed reaction product. The product of this reaction is foamed polyurethane or foamed polyisocyanurate, depending on the identity of the polyisocyanate and active hydrogen-containing compound reactants and their relative amounts. "Active hydrogen" means that the hydrogen is reactive with the isocyanate of the polyisocyanate reactant. The active hydrogen-containing compound contains at least two groups that contain active hydrogen (atoms) that is reactive with isocyanate. The polyurethane and polyisocyanurate reaction products (foamed) resulting from the process of the present invention are polymers. The reaction product can be a mixture of these polymers.

According to another embodiment of the present invention, it is the blowing agent composition comprising 57 to 73 wt% Z-1,1,1,4,4,4-hexafluoro-2-butene and 43 to 27 wt% E-1,1,1,4,4,4-hexafluoro-2-butene, based on the combined weight of these isomers totaling 100 wt%. This composition further comprises a catalyst for the reaction between polyisocyanate and said active hydrogen-containing compound, wherein the Z-isomer/E-isomer components of the composition acts as blowing agent during the reaction to provide the foamed reaction product. This composition including the catalyst also comprises the active-hydrogen-containing compound reactant, to form the commonly known B-side composition for the active hydrogen-containing compound/polyisocyanate reaction, wherein the polyisocyanate reactant comprises the A-side composition. The A-side composition together with the B-side composition forms the foamable composition that results in the foamed reaction product.

The process and blowing agent composition of the present invention exhibit a surprising result. The most prominent blowing agent HFC-245fa (1,1,1,3,3-pentafluoropropane) used in foaming the polyisocyanate/active hydrogen-containing compound reaction product produces a foam of increasing thermal conductivity as the foaming temperature is increased from 100°F (37.7°C), such as up to 150°F (65.6°C). Thus, the increase in foaming temperature is accompanied by a loss in thermal insulation (k-factor). Preferably the process of the present invention is carried out wherein said foaming is carried out at a temperature of at least 100°F (37.7°C). The "foaming temperature" is defined hereinafter. Foaming temperatures above 150°F (65.6°C) are not preferred because the reaction between polyisocyanate and active hydrogen-containing compound tends to occur too rapidly to the detriment of the resultant foamed reaction product.

In contrast to the experience with HFC-245fa blowing agent, the blowing agent composition of the present invention and the above mentioned foaming process provides a foamed reaction product in which the thermal conductivity of the foamed reaction product is not appreciably changed when the foaming temperature is changed within the range of 100°F (37.7°C) to 150°F (65.6°C). By "not appreciably changed" is meant thermal conductivity (k-factor in Btu in/hr·ft²°F (cal/cm.s°C, W/m·K)) does not change (increase) by more than 3.0%, preferably not more than 2.0%, and even more preferably not more than 1.0% upon using any foaming temperature from 100°F (37.7°C) to 150°F (65.6°C). This comparison is based on determination of thermal conductivity at 75°F (23.9°C) for both the blowing agent composition of the present invention and for HFC-245fa. This enables foam applicators broad discretion in the choice of foaming application temperature without sacrifice in foam result, applicability in a broader range of foaming equipment that operate at different temperatures, and avoidance of foaming penalty when the equipment temperature is in error.

### DETAILED DESCRIPTION

Preferred Z-isomer (Z-1,1,1,4,4,4-hexafluoro-2-butene)/E-isomer (E-1,1,1,4,4,4-hexfluoro-2-butene) blowing agent compositions of the present invention for use in the process of the present invention are as follows:
60 wt% to 73 w% Z-isomer/40 wt% to 27 wt% E-isomer,
65 wt% to 73 wt% Z-isomer/35 wt% to 27 wt% E-isomer, and
67 wt% to 73 wt% Z-isomer/33 wt% to 27 wt% E-isomer,
based on the combined weight of these isomers totaling 100 wt%.

In the use of any and all of the blowing agent compositions of the present invention as a blowing agent for making the foamed reaction product, notably polyurethane or polyisocyanurate polymer foams, the composition of the present invention can be combined prior to mixing with the other components in the foam-forming compositions. Alternatively, one can be mixed with some or all of the other components before the other is mixed in. For example, the Z-isomer can be first mixed with the other components in the foam-forming compositions before the E-isomer is added in.

The active hydrogen-containing compound reactant in the process of the present invention includes those described in U.S. Patent No. 4,394,491 and in WO 2014/113379 (isocyanate-reactive groups). Examples of such compounds have at least two hydroxyl groups per molecule, and more specifically comprise polyols, such as polyether or polyester polyols. Some of the hydroxyl groups can be replaced by amine groups, whereby the active hydrogen-containing compound contains both hydroxyl and amine groups. Preferably, the compound contains at least two hydroxyl groups, whereby the compound is a polyol. Examples of such polyols are those which have an equivalent weight of about 50 to about 700, normally of about 70 to about 300, more typically of about 90 to about 270, and carry at least 2 hydroxyl groups, usually 3 to 8 such groups.

Examples of suitable polyols comprise polyester polyols such as aromatic polyester polyols, e.g., those made by transesterifying polyethylene terephthalate (PET) scrap with a glycol such as diethylene glycol, or made by reacting phthalic anhydride with a glycol. The resulting polyester polyols may be reacted further with ethylene and/or propylene oxide to form an extended polyester polyol containing additional internal alkyleneoxy groups.

Additional examples of suitable polyols also comprise polyether polyols such as polyethylene oxides, polypropylene oxides, mixed polyethylene-propylene oxides with terminal hydroxyl groups, among others. Other suitable polyols can be prepared by reacting ethylene and/or propylene oxide with an initiator having 2 to 16, generally 3 to 8 hydroxyl groups as present, for example, in glycerol, pentaerythritol and carbohydrates such as sorbitol, glucose, sucrose and the like polyhydroxy compounds. Suitable polyether polyols can also include aliphatic or aromatic amine-based polyols.

An example of polyol also containing amine is the Mannich polyol. With respect to the polyisocyanate component (reactant), it is normally selected in such proportion relative to that of the active hydrogen-containing compound that the ratio of the equivalents of isocyanate groups to the equivalents of active hydrogen groups, i.e., the foam index, is from about 0.9 to about 10 and in most cases from about 1 to about 4.

While any suitable polyisocyanate can be employed in the instant process, examples of polyisocyanates useful for making polyisocyanate-based foam comprise at least one of aromatic, aliphatic and cycloaliphatic polyisocyanates, among others. Representative members of these compounds comprise diisocyanates such as meta- or para-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate (and isomers), napthylene-1,5-diisocyanate, 1-methylphenyl-2,4-phenyldiisocyanate, diphenylmethane-4,4-diisocyanate, diphenylmethane-2,4-diissocyanate, 4,4 -biphenylenediisocyanate and 3,3-dimethyoxy-4,4 biphenylenediisocyanate and 3,3-dimethyldiphenylpropane-4,4-diisocyanate; triisocyanates such as toluene-2,4,6-triisocyanate and polyisocyanates such as 4,4 -dimethyldiphenylmethane-2,2,5,5-tetraisocyanate and the diverse polymethylenepoly-phenylopolyisocyanates, mixtures thereof, among others.

A crude polyisocyanate may also be used in the practice of this invention, such as the crude toluene diisocyanate obtained by the phosgenating a mixture comprising toluene diamines, or the crude diphenylmethane diisocyanate obtained by the phosgenating crude diphenylmethanediamine. Specific examples of such compounds comprise methylene-bridged polyphenylpolyisocyanates, due to their ability to crosslink the polyurethane.

The polyisocyanate reactant can be a mixture of different polyisocyanates, and the active hydrogen-containing compound can be a mixture of different active-hydrogen-containing compounds.

Typically, before reacting with a suitable polyisocyanate, the active hydrogen-containing compound and optionally other additives are mixed with the blowing agent to form a foam-forming composition. Such foam-forming composition is typically known in the art as an isocyanate-reactive preblend, or B-side composition. The B-side composition contains the active hydrogen-containing compound and preferably also contains the blowing agent composition of the present invention. The A-side composition comprises the polyisocyanate. The foam-forming composition comprising the A-side composition and the B-side composition can be prepared in any manner convenient to one skilled in this art, including simply weighing desired quantities of each component (ingredient) and, thereafter, combining them in an appropriate container at the temperatures and pressures desired.

It is often desirable to employ minor amounts of additives in the B-side composition. Among these additives comprise one or more members from the group consisting of catalysts, surfactants, flame retardants such as TCPP, preservatives, colorants, antioxidants, reinforcing agents, filler, and antistatic agents, among others well known in this art.

Depending upon the composition, a surfactant can be employed to stabilize the foaming reaction mixture while curing. Such surfactants normally comprise a liquid or solid organosilicone compound. The surfactants are employed in amounts sufficient to stabilize the foaming reaction mixture against collapse and to prevent the formation of large, uneven cells. In one embodiment of this invention, about 0.1% to about 5% by weight of surfactant based on the total weight of all foaming ingredients (i.e. blowing agents + active hydrogen-containing compounds + polyisocyanates + additives) are used. In another embodiment of this invention, about 1.5% to about 3% by weight of surfactant based on the total weight of all foaming ingredients are used, i.e. the foamable composition.

One or more catalysts for the reaction of the active hydrogen-containing compounds, e.g. polyols, with the polyisocyanate may be also employed. The selection of catalyst together with the reactants can favor formation of foamed polyisocyanurate instead of or mixed with foamed polyisocyanate in the practice of the process of the present invention. While any suitable urethane catalyst may be employed, specific catalyst comprise tertiary amine compounds and organometallic compounds. Exemplary such catalysts are disclosed, for example, in U.S. Patent No. 5,164,419. For example, a catalyst for the trimerization of polyisocyanates, such as an alkali metal alkoxide, alkali metal carboxylate, or quaternary amine compound, may also optionally be employed herein. Such catalysts are used in an amount which measurably increases the rate of reaction of the polyisocyanate. Typical amounts of catalysts are about 0.1% to about 5% by weight based on the total weight of all foaming ingredients.

The process of the present invention is not limited to the specifics disclosed above with respect to the polyisocyanate and active hydrogen-containing compound reactants and the additives present in the A-side or B-side compositions. The relative amounts of polyisocyanate and active-hydrogen-containing compound reactants can be varied to obtain the foam desired, preferably a rigid foam. Excess polyisocyanate reactant can provide a foamed structure of both polyurethane and polyisocyanurate. These are conventional aspects of the present invention, wherein the invention resides in the blowing agent used to produce foaming of the reaction product and in the use of high foaming temperature. Thus, the present invention is applicable to any foamable composition arising from the reaction of polyisocyanate with active hydrogen-containing compound.

In the process of making a polyurethane-based or polyisocyanurate-based foam or polyurethane/polyisocyanurate-based foam, the active hydrogen-containing compound, polyisocyanate and other components are contacted, thoroughly mixed, and permitted to expand and cure into a cellular polymer. The mixing apparatus is not critical, and various conventional types of mixing head and spray apparatus are used. By conventional apparatus is meant apparatus, equipment, and procedures conventionally employed in the preparation of isocyanate-based foams in which conventional isocyanate-based foam blowing agents, such as fluorotrichloromethane (CCl₃F, CFC-11), are employed. Such conventional apparatus are discussed by: H. Boden et al. in chapter 4 of the Polyurethane Handbook, edited by G. Oertel, Hanser Publishers, New York, 1985; a paper by H. Grunbauer et al. titled "Fine Celled CFC-Free Rigid Foam - New Machinery with Low Boiling Blowing Agents" published in Polyurethanes 92 from the Proceedings of the SPI 34th Annual Technical/Marketing Conference, October 21-October 24, 1992, New Orleans, Louisiana; and a paper by M. Taverna et al. titled "Soluble or Insoluble Alternative Blowing Agents? Processing Technologies for Both Alternatives, Presented by the Equipment Manufacturer", published in Polyurethanes World Congress 1991 from the Proceedings of the SPI/ISOPA September 24-26, 1991, Acropolis, Nice, France.

The temperature of the reaction between polyisocyanate and active hydrogen-containing compound is the temperature of these reactants fed to the mixing apparatus, i.e. the temperature of the reactants at the start of the reaction. The temperature of the reactants is preferably the same, which aids in viscosity matching of the reactants as an aid to complete mixing together of the reactants. The temperature of the reaction is also considered to be the foaming temperature. At the preferred foaming temperature of at least 100°F (37.7°C,) it is important that this complete mixing occurs quickly to accommodate the increased reaction rate accompanying this high temperature. If the reactants have a different temperature, it is preferred that the average of their temperatures is at least 100°F (37.7°C). Viscosity matching can be accomplished by the reactants being at different temperatures.

The pressure of the apparatus to produce the spray of foaming reaction product can range from low pressure to high pressure. Low pressure is considered to be 100 psi (0.69 MPa) or less, generally at least 50 psi (0.345 MPa). High pressure is considered to be in the range of 1000 psi (6.9 MPa) to 2000 psi (13.8 MPa). These pressures are gauge pressure.

In one embodiment of this invention, a preblend of certain raw materials is prepared prior to reacting the polyisocyanate and active hydrogen-containing components. For example, it is often useful to blend the active hydrogen-containing compound, blowing agent, surfactant(s), catalysts(s) and other foaming ingredients, except for polyisocyanates, and then contact this blend (B-side composition) with the polyisocyanate. Alternatively, all the foaming ingredients may be introduced individually to the mixing zone where the polyisocyanate and active hydrogen-containing compound are contacted. It is also possible to pre-react all or a portion of the active hydrogen-containing compound with the polyisocyanate to form a prepolymer.

The amount of these Z-isomer/E-isomer blowing agent composition used with respect to the polyol reactant will depend on the foam density desired in the foamed reaction product of the process of the present invention, under the condition at which the process is carried out. Preferably, the foamed reaction product will have a density of no more than 30 kg/cc, and the amount of blowing agent composition of the present invention is effective to achieve this foam density. Generally, the amount of blowing agent composition is 7 to 15 wt% based on the weight of B-side composition, more preferably 10 to 13 wt%.

The invention composition and processes are applicable to the production of all kinds of polyurethane and polyisocyanurate foams, including, for example, integral skin, RIM and flexible foams, and in particular rigid closed-cell polymer foams useful in spray insulation, as pour-in-place appliance foams, or as rigid insulating board stock and laminates.

This process of the present invention also includes the making of foamed reaction products comprising closed-cell polyurethane or polyisocyanurate polymer. For good thermal performance, preferably, the foam cells within the foamed reaction product are an average of at least 90% closed cells as determined in accordance with ASTM D 6226.

The blowing agent composition of the present invention produces high quality foamed structure, not only characterized by low density and high % closed cells as mentioned above, but also by density uniformity across the thickness of the foamed structure.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified. If in the claim, such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole. The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of' occupies a middle ground between "comprising" and 'consisting of'.

Where applicants have defined an invention or a portion thereof with an open-ended term such as "comprising," it should be readily understood that (unless otherwise stated) the description should be interpreted to also include such an invention using the terms "consisting essentially of "or "consisting of."

### EXAMPLES

### Comparison Example - Spray Foaming of Polvisocvanate/Polvol Reaction Product Containing HFC-245fa Blowing Agent

The blowing agent is in the B-side (polyol) composition. The foaming is carried out at 1000 psi (6.9 MPa) sprayer gauge pressure and at temperatures of 110°F (43.3°C), 130°F (54.4°C) and 150°F (65.6°C). The foaming results at these temperatures are reported in Table 1.

**Table 1 - Use of HFC-245fa as blowing agent at increasing temperatures**

| **Foaming temp. (°F (°C))** | **Foam Density (kg/m³)** | **Thermal Conductivity (k-factor)** |
|---|---|---|
| 110 (43.3°C) | 35.6 | 0.1593 (5.57 × 10⁻⁵, 0.0230) |
| 130 (54.4°C) | 37.0 | 0.1651 (5.77 × 10⁻⁵, 0.0238) |
| 150 (65.6°C) | 39.2 | 0.1741 (6.09 × 10⁻⁵, 0.0251) |

Thermal conductivity is the following units: Btu in/hr·ft²°F (cal/cm·s·°C, W/m·K). Thermal conductivity is determined at 75°F (23.9°C).

As shown in Table 1, as the foaming temperature increases, so does the foam density, and as expected, the thermal conductivity also increases by more than 9%, indicating a deterioration of the effectiveness of the foam as a thermal insulator.

### Example 1 - Foaming using Z-1,1,1,4,4,4-hexafluoro-2-butene and E-1,1,1,4,4,4-hexafluoro-2-butene Mixtures as the Blowing agent

The foaming was carried out at 1000 psi (6.9 MPa) sprayer gauge pressure using different mixtures of these blowing agents and at different foaming temperatures. The results are reported in Table 2.

**Table 2 - Use of Mixtures of the Z- and E-Isomers as Blowing Agent**

| **Isomer Mixture** | **Foaming Temp (°F (°C))** | **Density (kg/m³)** | **Thermal Conductivity** |
|---|---|---|---|
| 40Z/60E* | poor quality foam | - | - |
| 50Z/50E* | poor quality foam | - | - |
| 60Z/40E | 100 (37.7°C) | 39.4 | 0.1593 (5.57, 0.0230) |
| 60Z/40E | 140 (60.0°C) | 42.1 | 0.1553 (5.43, 0.0224) |
| 70Z/30E | 100 (37.7°C) | 40.2 | 0.1555 (5.44, 0.0224) |
| 70Z/30E | 140 (60.0°C) | 43.7 | 0.1559 (5.45, 0.0225) |
| 80Z/20E* | 100 (37.7°C) | 45.8 | 0.1654 (5.78, 0.0238) |
| * Not according to the invention | | | |

The numerical amounts of Z and E in the Isomer mixture column are the wt%s of the isomer in the mixture. Thus, isomer mixture Z40/E60 means the mixture is 40 wt% Z-isomer and 60 wt% E-isomer. The poor quality of the sprayed foam for the 40Z/60E and 50Z/50E compositions is exhibited by the foam structure being frothy, i.e. exhibiting large open cells, and non-uniform foam structure across the thickness of the foamed structure. In contrast, the remaining blowing agents in Table 2 produced sprayed foams of the same thickness as the poor quality foams, but exhibiting no frothing, uniform density across the foam structure thickness, and an average of at least 95% closed cell. The units of thermal conductivity are the same as in Table 1. The first k-factors in parenthesis are values X10⁻⁵. The temperature at which thermal conductivity is measured is 75°F (23.9°C).

The results in Table 2 reveal the greater than 50 wt% of the Z-isomer is required in the mixture with the E-isomer and that 80 wt% Z isomer is too much. The results also reveal that the thermal conductivity is not appreciably changed over this broad foaming temperature range. The change for the 60Z-40E mixture is 2.6% (calculation: (0.1593-0.1553)/0.1553 × 100%)). The change for the 70Z/30E mixture is 0.3%. This enables foam applicators broad discretion in the choice of foaming application without sacrifice in foam quality, and/or permits quality foaming application when the equipment temperature is in error.

The A-side composition used in the Comparison Example and in Example 1 was a polymeric aromatic isocyanate with an -NCO content of 31.5 wt% and a viscosity of 200 cps at 25°C, present in an amount sufficient for index of 105-110.

The B-side composition used in the Comparison Example and in Example 1 is set forth in Table 3.

**Table 3 - B-side composition**

| **Ingredient** | **Wt%** |
|---|---|
| Polyester polyol | 31.25 |
| Mannich polyol | 32.00 |
| bis(dimethylamino)-3-oxapentane catalyst | 0.70 |
| 2(-N,N-dimethylaminoethyl-N-methylamino)ethanol catalyst | 0.30 |
| 1,3-propanediamine,N-[3-(dimethylamino)propyl]-N,N',N'-trimethyl catalyst | 2.60 |
| 2-butoxy ethanol co-solvent | 3.00 |
| Tris(chloropropyl) phosphate (TCPP) | 14.00 |
| Glycerin | 1.00 |
| Silicone surfactant | 1.00 |
| Water | 1.80 |
| Z/E isomer mixture (Table 2) | 12.25 |
| Total | 100.00 |

The polyester polyol has a hydroxyl number of 307 mg KOH/g, nominal functionality of 2.2, and dynamic viscosity of 5500 cps at 25°C.

The Mannich polyol has a hydroxyl number of 470 mg KOH/g, nominal functionality of 4, and dynamic viscosity of 10000 cps at 25°C.

### Example 2 - Solubility of Blowing Agent in Polyol of B-side

E-1,1,1,4,4,4-hexafluoro-2-butene has boiling temperature of 45.5°F (7.5°C) (1 atm) and causes the polyisocyanate/polyol reaction product to froth uncontrollably when the E-isomer is used by itself as the blowing agent, which disrupts the spray pattern when this method of application is used. This disruption of the spray pattern causes the deposited foamed structure to exhibit a rough exterior surface arising from expansion of the E-isomer that is not dissolved in the polyol of the B-side composition. A "frothed" foam lacks integrity by being easily collapsed. A comparison of solubilities when the E-isomer is the only blowing agent and when10 wt% (based on the weight of the polyol of the B-side composition) of the Z-isomer is supplemented by the E-isomer is presented in Table 4.

**Table 4 - Comparison of Solubilities of Blowing Agent in Polyol of B-side Composition**

| **Blowing Agent** | **E-Isomer Solubility in Polyol (wt%)** |
|---|---|
| E-isomer | less than 1.48 |
| E-isomer/10 wt% Z-isomer | 6.11 |

As shown in table 4, the E-isomer by itself has very low solubility in the polyol of the B-side composition, and this solubility is improved by adding the indicated amount of the Z-isomer to the polyol of the B-side composition. The improvement in solubility using the Z-isomer addition is greater than 400%. The combination of the 10 wt% Z-isomer and 6.11 wt% E-isomer dissolved in the polyol of the B-side composition corresponds to a blowing agent composition of 62.5 wt% Z-isomer and 37.5 wt% E-isomer.

The low boiling temperature of 45.5°F (7.5°C) for the E-isomer together with its low ODP and GWP make this isomer an attractive candidate as blowing agent for the polyisocyanate/polyol reaction product. The uncontrolled frothing of the reaction product caused by the insolubility of the E-isomer limits the use of the E-isomer for this purpose. The solubilization of the E-isomer by the presence of the Z-isomer as described above enables the E-isomer to be advantageously be used in the spray application foaming of the polyisocyanate/polyol reaction product without the detriment of uncontrolled frothing. Advantages include improvement in the foaming process and in the performance of the resultant foamed reaction product.

An example of the B-side composition which contains the polyol used in the solubility test is presented in Table 5.

**Table 5 - B-side Composition**

| **Ingredient** | **Wt%** |
|---|---|
| Polyester polyol (same as Table 3) | 35.00 |
| Mannich polyol | 32.30 |
| Catalyst: 1,3-propanediamine,N-[3-(dimethylamino)propyl]-N,N',N'-trimethyl | 1.90 |
| Catalyst: 2(N,N-dimethylaminoethyl-N-methylamino)ethanol | 0.10 |
| Catalyst: 1,5-bis(dimethylamino)-3-oxapentane | 0.23 |
| Silicone surfactant | 1.10 |
| Tris(chloropropyl) phosphate (TCPP) | 15.40 |
| Water | 1.70 |
| Blowing agent (Table 3) | 12.25 |
| Total | 100.00 |

The Mannich polyol has a hydroxyl number of 425 mg KOH/g, a nominal functionality of 3.2, and a dynamic viscosity of 4500 cps at 25°C.

The procedure for determining solubility (under ambient conditions-temperature of 15°C to 25°C and atmospheric pressure) is as follows: 50.000g of the polyol is added to a tared, 120 ml aerosol flask and weighed. Then, in small increments, the blowing agent is introduced via the gas inlet and the contents are mixed thoroughly then allowed to stand. When both isomers are used, they are introduced sequentially: first 5.0 g of the Z-isomer, followed by increments of the E-isomer until 2 phase behavior is first observed, indicating the limit of solubility of the E-isomer in the polyol. The addition of the 5.0 g of Z-isomer to the polyol forms a single phase, indicating complete solubility of this proportion (10 wt%) of the Z-isomer in the polyol. The total weight of E-isomer present in and thus dissolved in the single phase is the weight gain over the combination of 50.000 g of polyol and 5.0 g of Z-isomer in the single phase. The 6.11 wt% E-isomer reported in Table 4 is the amount of dissolved E-isomer compared to the 50.000 g of polyol. On this basis, the polyol contains in solution 10 wt% of the Z isomer and 6.11 w% of the E-isomer.

The mixture of the Z-isomer with the E-isomer has the effect of minimizing/controlling to eliminating the frothing associated with the E-isomer when used by itself in spray application and providing certain blowing agent mixtures that exhibit foaming insensitivity to produce high quality foams over a wide range of elevated foaming temperatures.

## Claims

1. Process comprising forming a foamed reaction product by reacting polyisocyanate with active hydrogen-containing compound in the presence of blowing agent comprising 57 to 73 wt% Z-1,1,1,4,4,4-hexafluoro-2-butene and 27 to 43 wt% E-1,1,1,4,4,4-hexafluoro-2-butene, based on the combined weight of these isomers totaling 100 wt%, to obtain said foamed reaction product.

2. Process of claim 1 wherein said foaming is carried out at a temperature of at least 100°F (37.7°C).

3. The process of claim 1 or 2 wherein said active-hydrogen-containing compound is polyol.

4. Composition comprising 57 to 73 wt% Z-1,1,1,4,4,4-hexafluoro-2- butene and 43 to 27 wt% E-1,1,1,4,4,4-hexafluoro-2-butene, based on the combined amounts of these isomers totaling 100 wt%, the composition further comprising a catalyst for the reaction between polyisocyanate and active hydrogen-containing compound and said active hydrogen-containing compound.

5. The composition of claim 4 wherein the amounts of said Z-1,1,1,4,4,4-hexafluoro-2- butene and E-1,1,1,4,4,4-hexafluoro-2-butene are 67 to 73 wt% and 33 to 27 wt%, based on the combined weight of these isomers totaling 100 wt%.

6. The composition of claim 4 or 5 wherein said active hydrogen-containing compound is polyol.

## Patentansprüche

1. Verfahren umfassend das Bilden eines geschäumten Reaktionsprodukts durch Reagieren von Polyisocyanat mit einer aktiven Wasserstoff enthaltenden Verbindung in Gegenwart eines Treibmittels umfassend 57 bis 73 Gew.-% Z-1,1,1,4,4,4-Hexafluor-2-buten und 27 bis 43 Gew.-% E-1,1,1,4,4,4-Hexafluor-2-buten, auf das kombinierte Gewicht dieser Isomere von insgesamt 100 Gew.-% bezogen, um das geschäumte Reaktionsprodukt zu erhalten.

2. Verfahren nach Anspruch 1, wobei das Schäumen bei einer Temperatur von mindestens 100 °F (37,7 °C) ausgeführt wird.

3. Verfahren nach Anspruch 1 oder 2, wobei die aktiven Wasserstoff enthaltende Verbindung Polyol ist.

4. Zusammensetzung umfassend 57 bis 73 Gew.-% Z-1,1,1,4,4,4-Hexafluor-2-buten und 43 bis 27 Gew.-% E-1,1,1,4,4,4-Hexafluor-2-buten, auf die kombinierten Mengen dieser Isomere von insgesamt 100 Gew.-% bezogen, wobei die Zusammensetzung ferner einen Katalysator für die Reaktion zwischen Polyisocyanat und aktiven Wasserstoff enthaltender Verbindung und die aktiven Wasserstoff enthaltende Verbindung umfasst.

5. Zusammensetzung nach Anspruch 4, wobei die Mengen des Z-1,1,1,4,4,4-Hexafluor-2-butens und E-1,1,1,4,4,4-Hexafluor-2-butens 67 bis 73 Gew.-% und 33 bis 27 Gew.-%, auf das kombinierte Gewicht dieser Isomere von insgesamt 100 Gew.-% bezogen, betragen.

6. Zusammensetzung nach Anspruch 4 oder 5, wobei die aktiven Wasserstoff enthaltende Verbindung Polyol ist.

## Revendications

1. Procédé comprenant la formation d'un produit réactionnel expansé par la réaction d'un polyisocyanate avec un composé contenant de l'hydrogène actif en la présence d'un agent d'expansion comprenant de 57 à 73 % en pds de Z-1,1,1,4,4,4-hexafluoro-2-butène et de 27 à 43 % en pds de E-1,1,1,4,4,4-hexafluoro-2-butène, sur la base du poids combiné de ces isomères totalisant 100 % en pds, pour obtenir ledit produit réactionnel expansé.

2. Procédé selon la revendication 1, ladite expansion étant conduite à une température d'au moins 100 °F (37,7 °C).

3. Procédé selon la revendication 1 ou 2, ledit composé contenant de l'hydrogène actif étant le polyol.

4. Composition comprenant de 57 à 73 % en pds de Z-1,1,1,4,4,4-hexafluoro-2-butène et de 43 à 27 % en pds de E-1,1,1,4,4,4-hexafluoro-2-butène, sur la base des quantités combinées de ces isomères totalisant 100 % en pds, la composition comprenant en outre un catalyseur pour la réaction entre le polyisocyanate et le composé contenant de l'hydrogène actif et ledit composé contenant de l'hydrogène actif.

5. Composition selon la revendication 4, les quantités desdits Z-1,1,1,4,4,4-hexafluoro-2-butène et E-1,1,1,4,4,4-hexafluoro-2-butène étant de 67 à 73 % en pds et de 33 à 27 % en pds, sur la base du poids combiné de ces isomères totalisant 100 % en pds.

6. Composition selon la revendication 4 ou 5, ledit composé contenant de l'hydrogène actif étant le polyol.
